# FASCICULE DE BREVET EUROPEEN

(11) **EP 3 285 908 B1**
(45) Date de publication et mention de la délivrance du brevet: **15.08.2018**
(21) Numéro de dépôt: 16733127.1
(22) Date de dépôt: 11.04.2016
(51) Int. Cl.: B01D 46/00, F01M 13/04

(54) **DISPOSITIF ET AGENCEMENT À ÉLÉMENT FILTRANT POUR SÉPARER L'HUILE DES GAZ DE CARTER D'UN MOTEUR À COMBUSTION INTERNE**
VORRICHTUNG UND ANORDNUNG MIT EINEM FILTERELEMENT ZUM ABSCHEIDEN VON ÖL AUS DEN KURBELGEHÄUSEEMISSIONEN EINER BRENNKRAFTMASCHINE
DEVICE AND ARRANGEMENT HAVING A FILTERING ELEMENT FOR SEPARATING OIL FROM THE CRANKCASE EMISSIONS OF AN INTERNAL COMBUSTION ENGINE

(30) Priorité: 24.04.2015 FR 1553707
(43) Date de publication de la demande: 28.02.2018
(73) Titulaire: SOGEFI FILTRATION, 78280 Guyancourt (FR)
(72) Inventeur: BONNE, Samuel, 14350 La Graverie 6 (FR); PETIPAS, Christophe, 78150 Le Chesnay (FR); FALCHON, Jean-Jacques, 78140 Velizy (FR)
(74) Mandataire: Cabinet Plasseraud
(86) Numéro de dépôt international: PCT/FR2016/050826
(87) Numéro de publication internationale: WO 2016/170248

(56) Documents cités:
- EP-A1- 2 383 029
- WO-A1-2013/067245
- FR-A1- 2 933 626

## Description

### DOMAINE DE L'INVENTION

La présente invention est relative aux dispositifs de séparation d'éléments en suspension dans un gaz issu d'un carter de moteur à combustion interne. Le domaine d'application de l'invention concerne en particulier la séparation d'huile des gaz de carter dans les moteurs thermiques des véhicules routiers (ex : automobiles, poids lourds, motocyclette), bateaux ou moteurs thermiques industriels (groupe électrogène par exemple).

### ARRIERE-PLAN TECHNOLOGIQUE DE L'INVENTION

De manière connue en soi le carter est relié à l'admission d'air du moteur à combustion interne via un dispositif de séparation afin d'évacuer en continu les gaz de carter et d'en extraire l'huile en suspension. C'est ce qui est connu sous le nom de circuit de recyclage des gaz de carter ou gaz de blow-by par l'homme du métier. Différents moyens de séparer l'huile des gaz de carter sont employés dans l'art antérieur, parmi lesquels on peut distinguer les cyclones, les chicanes, les séparateurs centrifuges, les coalesceurs statiques et les coalesceurs dynamiques.

Dans la catégorie des coalesceurs dynamiques, le média utilisé est typiquement le même que dans les coalesceurs statiques, l'élément filtrant comprenant ce média étant en outre mis en rotation. Ces dispositifs cumulent les avantages du coalesceur statique et des séparateurs centrifuges : l'efficacité est élevée grâce au média filtrant et la perte de charge est réduite grâce à l'effet centrifuge qui contribue à l'évacuation de l'huile hors du média. Cette mise en rotation permet d'ailleurs d'utiliser un média plus fermé et donc plus efficace tout en gardant une perte de charge acceptable. On se référera notamment au document FR 2 933 626 qui décrit un tel dispositif. L'élément de rotor engagé dans l'espace intérieur de l'élément filtrant coopère typiquement avec l'un des deux flasques de l'élément filtrant. Cependant, l'autre flasque peut alors présenter un risque plus grand de rupture en raison des efforts de torsion (ces efforts tendant à décoller ce flasque par rapport au média filtrant).

Un autre inconvénient de ce genre de dispositif de séparation est que sa construction est plus complexe du fait de la mobilité des pièces et des impératifs d'étanchéité entre la zone en amont de l'élément filtrant où circulent les gaz de carter et la zone en aval où circulent les gaz épurés. L'assemblage sur l'arbre d'entraînement peut aussi s'avérer délicat. Il en résulte un surcoût qui limite l'utilisation des coalesceurs dynamiques.

### OBJETS DE L'INVENTION

La présente invention a pour but de pallier un ou plusieurs des inconvénients susmentionnés en proposant un agencement d'élément filtrant pour dispositif de déshuilage des gaz issus d'un carter moteur, plus simple de conception.

A cet effet, l'invention concerne un agencement d'élément filtrant pour dispositif d'épuration d'un gaz issu d'un carter de moteur à combustion interne, qui comprend :
- un élément filtrant monté rotatif autour d'un axe et présentant un média filtrant annulaire, et
- un élément de rotor apte à faire partie d'un système d'entraînement en rotation, permettant de faire tourner l'élément filtrant à l'aide de crans formés sur la face externe d'un manchon,
sachant que les flasques de l'élément filtrant sont fixés l'un à l'autre dans un espace intérieur délimité par le média filtrant (typiquement par encliquetage), en utilisant au moins un organe de retenue et une partie d'ancrage coopérant entre eux avec un effet anti-rotation, la partie d'ancrage étant munie de moyens d'engagement ou projections internes formant des surfaces de contact (préférentiellement anguleuses), qui s'engagent dans les crans du manchon lorsque l'élément de rotor est inséré dans l'espace intérieur.

Le média filtrant annulaire, en particulier du type pourvu d'un média coalesceur, s'étend longitudinalement entre une première face axiale et une deuxième face axiale autour d'un axe central, le média filtrant ayant une face interne délimitant l'espace intérieur.

L'élément de rotor, destiné à l'entrainement en rotation de l'élément filtrant, est engagé dans l'espace intérieur contre une pluralité de surfaces de contact de l'élément filtrant dans un état assemblé entre l'élément de rotor et l'élément filtrant. Le manchon, monobloc, qui fait partie de l'élément de rotor, s'étend longitudinalement autour de l'axe central et les N crans formés sur la face externe peuvent être délimités chacun entre deux bords longitudinaux (N étant un nombre entier supérieur ou égal à deux). Le manchon est adapté pour être inséré dans l'espace intérieur (typiquement en traversant une ouverture axiale de l'élément filtrant).

En pratique, l'élément filtrant comprend un premier flasque recouvrant la première face axiale et pourvu de préférence d'une première ouverture centrale (permettant l'insertion du manchon dans l'espace intérieur), ce premier flasque comprenant la partie d'ancrage qui s'étend dans l'espace intérieur longitudinalement autour du manchon vers le deuxième flasque de l'élément filtrant. Des premières surfaces de contact espacées (de la pluralité de surfaces de contact) sont définies par la partie d'ancrage qui présente N moyens d'engagement en saillie radialement vers l'intérieur pour s'engager de façon ajustée dans les N crans (en pouvant ainsi coopérer avec l'un et l'autre desdits deux bords longitudinaux et bloquer toute rotation relative entre les deux flasques). Le ou les organes de retenue, qui font partie du deuxième flasque, sont en prise avec la partie d'ancrage pour rendre solidaires en rotation les premier et deuxième flasques.

Avec un tel agencement, il est permis d'indexer les deux flasques l'un par rapport à l'autre tout en réalisant un blocage en rotation sur le manchon d'entraînement. Les moyens d'engagement qui forment des projections de la partie d'ancrage jouent un rôle complètement similaire à celui de clavettes. Mais à la différence d'une clavette, chaque projection peut être formée intégralement avec le premier flasque, ce qui limite le risque de rupture.

Selon une particularité, le deuxième flasque comprend deux organes de retenue espacés en prise avec la partie d'ancrage et permettant de rendre solidaires en rotation les premier et deuxième flasques. Chacun de ces deux organes de retenue coopère par butée avec la partie d'ancrage, en formant une butée axiale s'opposant à la séparation dans des directions opposées des deux flasques.

Le fait d'utiliser deux organes de retenue rend la connexion entre les flasques particulièrement robuste (ce qui permet aussi, le cas échéant, de réduire l'épaisseur dans des parties déformables de ces organes de retenue). On comprend que l'agencement d'élément filtrant est particulièrement simple et on réunit trois fonctions au niveau d'éléments de liaison définis par la partie d'ancrage du premier flasque : indexage avec le deuxième flasque (pas de rotation relative possible), maintien de la hauteur de l'élément filtrant (pas d'écartement axial possible), et liaison mécanique avec l'élément de rotor.

Dans ce qui précède et dans tout ce qui suit, on comprend que le terme « flasque » doit être interprété de manière extensive et ne peut pas être réduit à la seule portion radiale de recouvrement du média filtrant. Tout au contraire, il n'est absolument pas exclu que le flasque comporte des extensions axiales (cf. partie d'ancrage notamment) et/ou radiales, le cas échéant avec un assemblage de plusieurs pièces.

Selon une particularité, le manchon comprend une portion de conduite conçue pour faire circuler un flux de gaz dans l'espace intérieur vers ou depuis la face interne du média filtrant, la portion de conduite faisant saillie axialement vers l'extérieur depuis le premier flasque. Ceci permet de canaliser les gaz sans ajouter une pièce spécifique, l'extrémité de la portion de conduite pouvant être entourée par un joint dynamique. Notamment lorsque le sens de circulation des gaz est de type centripète, une sortie de gaz épurés peut être prévue dans un couvercle du dispositif d'épuration qui intègre le joint dynamique. L'agencement d'élément filtrant avec une telle portion de conduite dans un élément de rotor présente un bon compromis entre la perte de charge d'une part et l'efficacité de la séparation d'autre part.

Selon une autre particularité, les deux organes de retenue s'étendent à distance de la portion de conduite et définissent des deuxièmes surfaces de contact de la pluralité de surfaces de contact. Dans ce cas, l'élément filtrant est alors aussi en liaison mécanique avec l'élément de rotor par l'intermédiaire du deuxième flasque. Il est en particulier avantageux de définir une zone annulaire de contact étanche manchon - deuxième flasque, ce qui permet d'éviter le recours à un joint séparé additionnel.

Dans divers modes de réalisation du dispositif d'épuration des gaz de carter selon l'invention, on peut éventuellement avoir recours en outre à une ou plusieurs des dispositions suivantes :
- les deux organes de retenue sont en contact avec la partie d'ancrage de façon respective dans deux zones de chevauchement, les deux organes de retenue comportant chacun une portion rigide d'indexation en rotation, adaptée pour remplir une extrémité des N crans dans l'état assemblé (ceci permet à des surfaces d'indexation en rotation qui appartiennent aux deux flasques de venir en prise avec les bords longitudinaux d'un même cran, de sorte qu'on obtient une très bonne répartition des efforts de torsion/cisaillement entre les deux flasques) ;
- chacun des deux organes de retenue présente une patte, élastiquement déformable, qui s'étend longitudinalement depuis la portion rigide d'indexation en rotation jusqu'à une extrémité libre formant une butée en prise avec la partie d'ancrage (ceci rend l'assemblage de l'élément filtrant particulièrement aisé, et peut permettre d'augmenter la cadence de production).
- la partie d'ancrage comporte deux évidements de retenue débouchant chacun radialement vers l'extérieur et placés respectivement en position adjacente à deux projections déterminées qui définissent deux des moyens d'engagement, l'extrémité libre de la patte présentant un ergot qui fait saillie radialement vers l'intérieur depuis une face interne de la patte et adapté pour être reçu dans un évidement correspondant des deux évidements de retenue. L'évidement peut se présenter sous forme d'ouverture, ce qui est avantageux pour la circulation des gaz (on limite la perte de charge si le manchon et la partie d'ancrage qui l'entoure présentent de nombreuses ouvertures radiale).

- les deux organes de retenue sont diamétralement opposés par rapport à une ouverture centrale du deuxième flasque, une ou deux portions d'indexation en rotation, distinctes des deux organes de retenue, étant en outre formées dans le deuxième flasque. Ainsi lorsque le nombre N de crans est égal à quatre, on peut rendre la liaison mécanique avec l'élément de rotor plus robuste, sans complexifier l'assemblage entre les deux flasques (sachant que les crans sont typiquement indéformables, on augmente la résistance de la liaison mécanique en augmentant les surfaces de contact engagés dans les crans).
- le manchon comprend des portions de collet formées dans une première zone annulaire (qui est de préférence distante de la portion de conduite), les portions de collet permettant de rehausser localement les bords longitudinaux, chacun des deux organes de retenue étant reçu, en position adjacente (en particulier axialement adjacente) à l'un des N moyens d'engagement, dans l'un des N crans et s'étendant latéralement de l'une à l'autre de deux portions de collet adjacentes dans l'état assemblé. Avec ce type de configuration, la liaison mécanique est améliorée et le risque d'user le plastique (en particulier lorsque le manchon est métallique) est réduit.
- le manchon comporte une extrémité axialement saillante vers l'extérieur par rapport au premier flasque et des ouvertures radiales dans une deuxième zone annulaire intermédiaire entre l'extrémité saillante et une paroi transversale, les ouvertures radiales formant partie de la portion de conduite.
- la partie d'ancrage comporte une paire de doigts qui s'étendent longitudinalement dans l'espace intérieur depuis une portion tubulaire du premier flasque entourant l'ouverture centrale, sachant que dans la paire considérée, les doigts sont espacés par une fente longitudinale, proximale par rapport à l'ouverture centrale, l'un des deux organes de retenue s'étendant au moins en partie dans la fente longitudinale et étant enserré entre deux portions de collet adjacentes (cette disposition permet de limiter les possibilités de déplacement latéral de la partie flexible des organes de retenue).
- les N moyens d'engagement sont définis par N projections et les doigts de la paire sont connectés par une terminaison commune, distale par rapport à l'ouverture centrale, qui définit une des N projections (l'espacement entre les doigts permet de former des ouvertures radiales de passage pour le gaz, sans fragilisation du manchon grâce à la terminaison commune qui peut être prise en sandwich entre un organe de retenue et le fond d'un cran).
- le manchon est métallique et comprend en outre une portion de raccordement à un arbre d'entraînement, ainsi qu'une paroi transversale s'étendant entre la portion de conduite et la portion de raccordement, au moins un orifice axial dans la paroi transversale permettant le passage d'un organe d'attache allongé tel qu'une vis (ceci permet d'installer de façon simple l'agencement d'élément filtrant in situ, à l'extrémité d'un arbre tournant).
- chacun des N crans du manchon comporte une surface de fond sensiblement plane, N étant préférentiellement égal à quatre.
- le manchon est métallique et présente une première surface annulaire d'étanchéité, de préférence formée par un premier bourrelet, et une deuxième surface annulaire d'étanchéité, de préférence formée par un deuxième bourrelet, chacune des première et deuxième surfaces annulaires d'étanchéité étant formée sur ladite face externe de part et d'autre des N crans.
- le deuxième flasque, moulé en matière plastique, présente une portion radiale qui recouvre la deuxième face axiale du média filtrant et une jupe interne espacée par rapport à la portion radiale en délimitant une gorge annulaire, sachant qu'à l'état assemblé la première surface annulaire est en contact radial étanche contre une portion tubulaire du premier flasque (lui aussi moulé en matière plastique), et la deuxième surface annulaire est en contact radial étanche contre une face interne annulaire de la jupe interne (ces deux zones d'étanchéité métal-plastique limitent le nombre de pièces et donc facilitent l'assemblage de l'agencement d'élément filtrant).
- les N crans débouchent axialement du côté de la deuxième face dans ledit état assemblé, l'élément de rotor comportant un épaulement venant en butée axiale contre le premier flasque en dehors de l'espace intérieur (avec cette disposition, il est aisé d'une part de monter l'élément filtrant sur l'élément de rotor par insertion du manchon du côté d'une première face, et d'autre part d'installer l'agencement d'élément filtrant sur un arbre d'entraînement dont l'extrémité s'insère du côté d'une deuxième face de l'agencement ; en outre un simple collet de l'arbre d'entraînement permet de limiter la profondeur d'insertion de l'arbre d'entraînement tout en supportant le deuxième flasque).

Il est également proposé un dispositif d'épuration de gaz issu d'un carter de moteur à combustion interne, comprenant l'agencement d'élément filtrant selon l'invention, ce dispositif comprenant en outre :
- un arbre d'entraînement en rotation qui définit un axe de rotation et présente une extrémité d'ancrage pour fixer l'élément de rotor avec un même alignement selon l'axe de rotation (qui coïncide sensiblement avec l'axe central du média filtrant) ;
- un boîtier qui comporte une entrée pour l'admission de gaz non traités, une sortie pour évacuer les gaz traités, et un passage pour l'arbre d'entraînement aligné avec l'axe de rotation, l'extrémité de l'arbre d'entraînement s'étendant dans l'espace intérieur en étant entouré par une portion de raccordement de l'élément de rotor ; et
- deux moyens de butée opposés formés respectivement sur l'arbre d'entrainement et l'élément de rotor, de préférence à l'extérieur de l'espace intérieur, permettant à l'élément filtrant d'être bloqué axialement par rapport à l'arbre d'entraînement lorsque l'élément de rotor est fixé à l'extrémité d'ancrage.

Un autre objet de l'invention est de proposer un procédé d'assemblage simple d'un agencement d'élément filtrant, permettant de limiter les risques de rupture au niveau de l'insert filtrat.

Il est proposé à cet effet un procédé d'assemblage d'un agencement d'élément filtrant, comportant les étapes consistant essentiellement à :
- fixer un premier flasque à un deuxième flasque dans un espace intérieur délimité par une face interne d'un média filtrant coalesceur de format annulaire, en mettant en prise au moins un organe de retenue appartenant au deuxième flasque avec une partie d'ancrage du premier flasque et permettant de rendre solidaires en rotation les premier et deuxième flasques, ce grâce à quoi un élément filtrant est obtenu ;
- insérer dans l'espace intérieur un manchon monobloc destiné à l'entrainement en rotation de l'élément filtrant, en insérant le manchon au travers d'une ouverture centrale définie par le premier flasque ;
- rendre solidaires en rotation le manchon et l'élément filtrant, en engageant dans N crans d'une surface externe du manchon, N projections espacées formées dans la partie d'ancrage du premier flasque qui font saillie radialement vers l'intérieur depuis une face interne de l'élément filtrant, N étant un nombre entier supérieur ou égal à deux, l'engagement étant réalisé lors de l'insertion du manchon selon un déplacement linéaire, sachant que lorsqu'il est inséré dans l'espace intérieur, le manchon est disposé de façon à ce que les N crans débouchent axialement en direction du deuxième flasque.

Avantageusement, il n'y a pas besoin de pièces d'interconnexion complexes et les liaisons mécaniques peuvent toutes être réalisées dans l'espace intérieur (en laissant la face externe du média filtrant disponible), sans réduire significativement la section de passage pour les gaz. Les contacts entre les pièces peuvent être réalisés à distance de la portion de conduite définie par le manchon, ce qui permet à la section axiale de passage définie par le manchon d'être peu différente de la section de l'espace intérieur (typiquement sans réduire par deux le diamètre de passage), et de préférence plus large ou au mois aussi large que la section à l'extrémité de l'arbre d'entraînement.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en perspective éclatée d'un agencement d'élément filtrant selon un premier mode de réalisation conforme à l'invention ;
- la figure 2 est une vue en coupe de l'agencement d'élément filtrant de la figure 1, avec un état inséré du manchon d'entraînement en rotation ;
- la figure 3A est une vue en perspective illustrant l'interconnexion entre le deuxième flasque et la partie d'ancrage du premier flasque de l'élément filtrant, conformément au premier mode de réalisation de l'invention ;
- la figure 3B est une vue de côté illustrant l'interconnexion de la figure 3A, avec en outre l'élément de rotor inséré intérieurement ;
- la figure 4 est une vue en coupe verticale d'un dispositif d'épuration de gaz de carter qui intègre l'agencement d'élément filtrant conformément au premier mode de réalisation de l'invention ;
- la figure 5 est une vue en perspective illustrant le premier flasque avec deux projections adaptées pour glisser dans les crans correspondants du manchon, selon un deuxième de réalisation de l'invention ;
- la figure 6 est une vue de dessous d'un manchon utilisé dans le deuxième de réalisation de l'invention et adapté pour coopérer avec le premier flasque de la figure 5 ;
- la figure 7 est une vue schématique en coupe verticale d'un dispositif d'épuration de gaz de carter selon une variante de réalisation conforme à l'invention.

### DESCRIPTION DES MODES DE REALISATION PREFERES DE L'INVENTION

Sur les différentes figures, des références identiques indiquent des éléments identiques ou similaires.

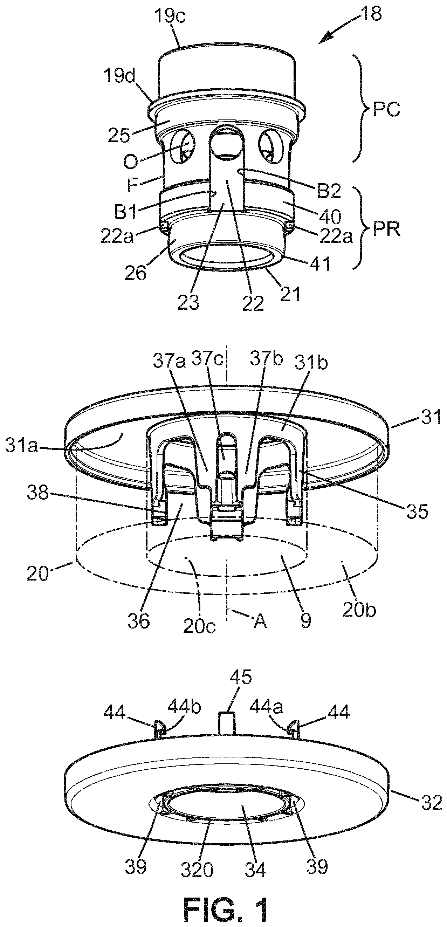

En référence aux figures 1, 4 et 7, le dispositif de séparation 10 permet de séparer les parties liquides (et éventuellement solides) des gaz issus du carter de moteur à combustion interne et qui sont directement issues du carter. Le dispositif de séparation 10 fait typiquement partie d'un sous-ensemble de moteur avec une conduite de liaison rejoignant l'admission d'air.

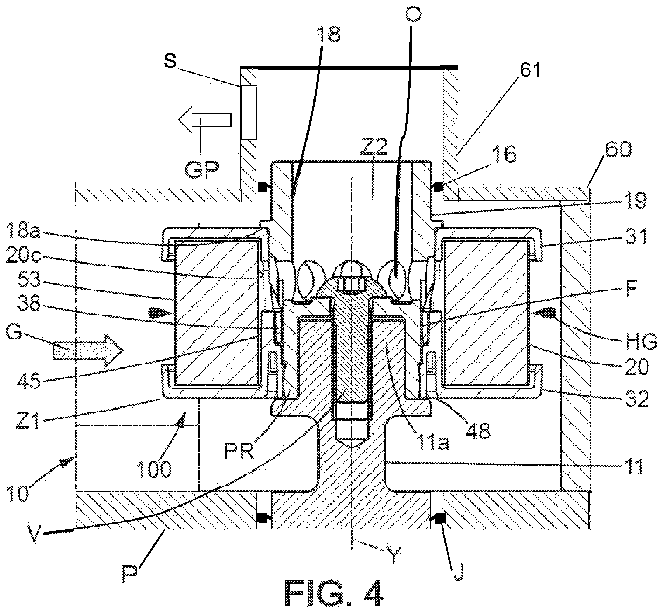

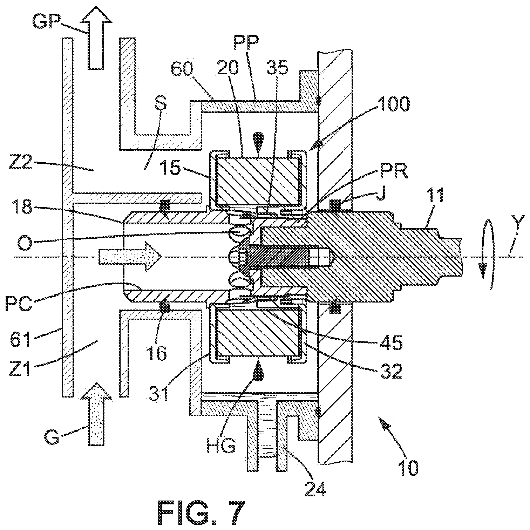

Comme cela est visible sur chacune des figures 4 et 7, le dispositif de séparation 10 est monté à l'extrémité 11a d'un arbre 11 qui est mis directement ou indirectement en rotation (pignon) par un quelconque organe d'entraînement en rotation du carter de distribution, tel que le vilebrequin, l'arbre à cames ou le tendeur de chaîne. L'entraînement en rotation peut également être obtenu par un des organes lié à la distribution, comme par exemple une poulie, la pompe haute-pression à gazole, l'alternateur, le compresseur de climatisation, la pompe à eau. L'entraînement peut encore être réalisé par un moteur électrique (non représenté) indépendant du moteur à combustion interne ou par un moteur hydraulique lié à la pression d'huile.

L'élément filtrant 15 a une capacité de séparation de type statique, fonctionnant donc même en l'absence de rotation ou mouvement analogue. Cet élément filtrant 15 est ici constitué d'une cartouche à média filtrant 20, typiquement ayant une aptitude à faire coalescer des particules d'huile. Il est monté sur l'arbre 11, de préférence de manière amovible, par l'intermédiaire d'un élément de rotor 18.

Le média filtrant 20 s'étend longitudinalement autour d'un axe central A entre une première face axiale 20a et une deuxième face axiale 20b. Ce média filtrant 20 est pourvu d'un média coalesceur. Le média filtrant a une face interne 20c (du côté de l'axe central A) qui délimite un espace intérieur 9 dans lequel des gaz peuvent circuler. Un premier flasque 31 recouvre la première face axiale 20a, en étant typiquement collé à celle-ci, et un deuxième flasque 32 recouvre la deuxième face axiale 20a de façon analogue.

Les flasques 31 et 32 peuvent présenter un même diamètre D qui correspond au diamètre apparent de l'agencement d'élément filtrant 100. De manière nullement limitative, la forme préférée du média 20 est annulaire. D'autres formes, en particulier formes partiellement annulaires et/ou symétriques par rapport à l'axe de central A peuvent aussi être utilisées. La forme doit présenter dans tous les cas au moins une surface d'entrée proximale par rapport à l'axe central A, définie par la face interne 20c et au moins une surface de sortie distale.

L'axe de rotation Y défini par l'arbre 11 est typiquement un axe vertical dans le cas de la figure 4 mais peut aussi être horizontal comme dans le cas de la figure 7; on comprend qu'il peut présenter le cas échéant une toute autre orientation. L'élément de rotor 18 comporte un manchon 19, ici monobloc, qui est destiné à prolonger l'arbre 11 dans la direction longitudinale définie par l'axe de rotation Y. L'élément de rotor 18 peut aussi optionnellement comporter des éléments d'étanchéité, assemblés à une extrémité du manchon et/ou entourant une portion de surface externe du manchon 19.

Le manchon 19 est rigide, de préférence métallique ou à base d'un matériau plastique ou composite non flexible, et comprend une portion PR de raccordement à l'arbre 11 d'entraînement. La portion PR comprend une paroi transversale 19a qui forme, du côté opposé à l'arbre 11, le fond d'une portion de conduite PC pour faire circuler des gaz. La paroi transversale 19a forme également le fond de la portion PR de raccordement, du côté de l'arbre 11. La portion PR de raccordement définit ici un logement L délimité par une portion tubulaire d'extrémité 21. Au moins un orifice axial 19b est prévu dans la paroi transversale 19a pour le passage d'un organe d'attache allongé tel qu'une vis V.

Bien que les figures 4 et 7 montrent le cas d'une vis V séparable d'un logement fileté formé à l'extrémité 11a de l'arbre 11, on peut aussi prévoir une tige filetée à l'extrémité 11a, qui coopère avec un écrou. La tête de vis ou l'écrou s'étendent dans le creux défini par la portion de conduite PC et le manchon 19 peut être maintenu ainsi solidaire de l'arbre 11 (solidaire en rotation et sans possibilité de déplacement axial). Dans des alternatives, on peut utiliser un autre mode de fixation entre le manchon 19 et l'extrémité 11a, utilisant des organes d'attache connus en soi (le cas échéant en utilisant des ergots ou pattes radiales, par exemple avec un raccordement de type baïonnette, ce qui peut permettre de supprimer la paroi transversale 19a).

L'extrémité 11a remplit le logement L et est en contact radial avec la face interne de la portion tubulaire d'extrémité 21. Le manchon 19 présente une face externe F pourvue de reliefs permettant de se relier à l'élément filtrant 15 avec un blocage en rotation. Ces reliefs s'étendent de préférence au moins sur l'extérieur de la portion PR de raccordement. Lorsque l'élément de rotor 18 est engagé dans l'espace intérieur 9 contre une pluralité de surfaces de contact SC, SC', par les reliefs de la face externe F du manchon 19, l'élément filtrant 15 peut tourner sans jeu relatif par rapport à l'élément de rotor 18. La portion PR de raccordement peut aussi permettre, optionnellement à elle seule, d'empêcher la circulation de gaz en direction de l'extrémité 11a, par exemple en définissant avec l'élément filtrant 15 une zone d'étanchéité annulaire dans l'espace intérieur 9.

Le manchon 19 peut comporter, dans sa portion de conduite PC, une extrémité saillante 19c qui fait saillie axialement vers l'extérieur par rapport au premier flasque 31 et des ouvertures radiales O. De telles ouvertures radiales O sont positionnées dans une zone annulaire intermédiaire qui s'étend entre l'extrémité 19c et la paroi transversale 19. Une large ouverture pour les gaz est définie à l'extrémité 19c, de sorte que la portion de conduite PC est conçue pour faire circuler un flux de gaz dans l'espace intérieur 9 vers ou depuis la face interne 20c du média filtrant 20. L'extrémité 19c communique dans ce cas avec une entrée de gaz non traités G ou avec une sortie de gaz traités GP.

Dans l'exemple non limitatif des figures 1-2 et 3A-3B, le manchon 19 présente un premier bourrelet 25 formant une première surface annulaire d'étanchéité en contact annulaire radial avec le premier flasque 31, à proximité d'une ouverture centrale 33 définie par le premier flasque 31. En complément ou en alternative, le manchon 19 peut définir une surface annulaire d'étanchéité avec le deuxième flasque 32. Ici, le manchon 19 présente un deuxième bourrelet 26 formant une deuxième surface annulaire d'étanchéité en contact annulaire radial avec le deuxième flasque 32, à proximité d'une ouverture centrale 34 définie par le deuxième flasque 32.

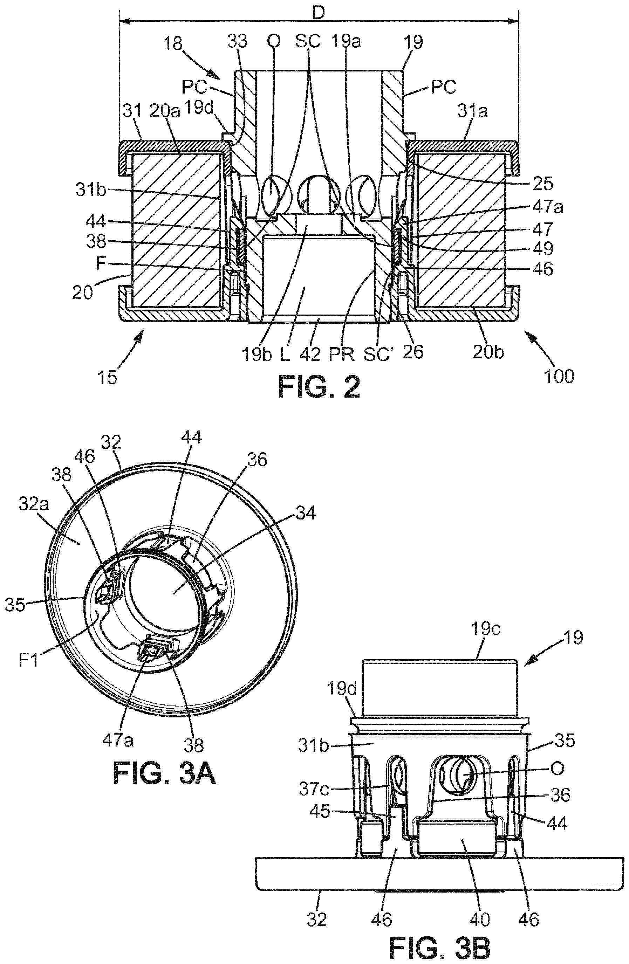

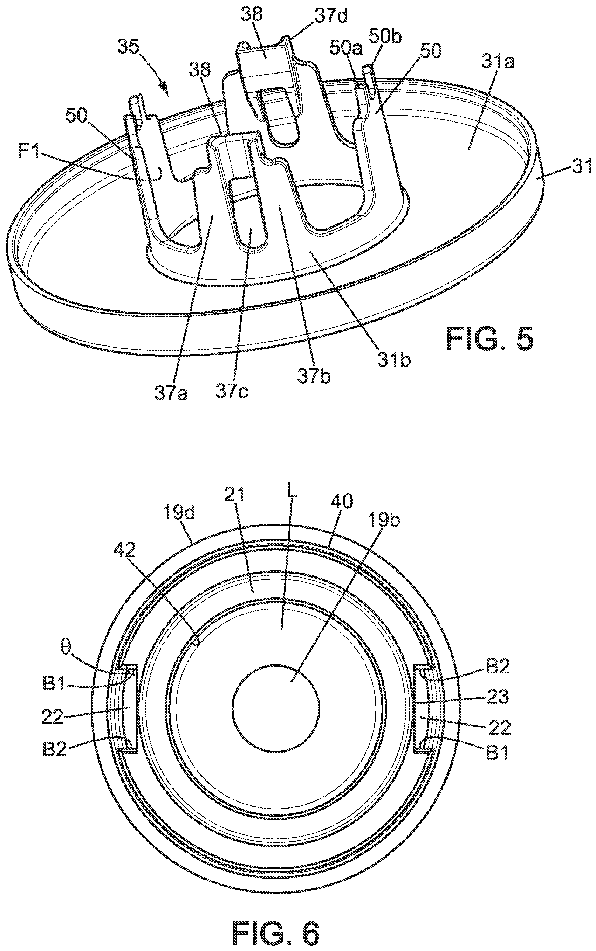

En référence à présent aux figures 1, 3A-3B et 6, on peut voir que la face externe F présente un certain nombre N de crans 22 (avec N supérieur ou égal à deux). Chacun de ces crans 22 du manchon 19 comporte une surface de fond 23, qui est de préférence sensiblement plane. Les crans 22 peuvent être délimités chacun entre deux bords longitudinaux B1, B2, qui s'étendent ici parallèlement à l'axe central A (dans un état assemblé du manchon 19 avec l'élément filtrant 15). Bien que quatre crans 22 soient prévus dans l'exemple des figures 1 et 3A-3B, un nombre inférieur de crans, par exemple deux, peut être suffisant comme illustré dans les cas de la figure 6. Un nombre N supérieur peut aussi convenir, de préférence sans dépasser huit crans 22. Bien entendu, en variante, les crans 22 peuvent présenter des bords B1, B2 qui ne sont pas parallèles ou continus ; il suffit que ces bords B1, B2 présentent une composante longitudinale significative.

Une section en U de la face interne des crans 22, avec typiquement deux angles droits, correspond à un bon compromis entre le besoin de robustesse du manchon 19 et l'effet de prise entre les surfaces de contact SC et SC' (ici anguleuses) et le manchon 19. D'autres formes de surface avec complémentarité de profil (par exemple forme convexe s'insérant dans une forme concave complémentaire du cran 22) conviennent aussi dans des variantes de réalisation.

Comme bien visible sur les figures 1-2, les première et deuxième surfaces annulaires d'étanchéité sont formées sur la face externe F de part et d'autre des crans 22, pour éviter toute interférence avec la zone de liaison mécanique (avec effet anti-rotation).

L'interconnexion entre la face externe F du manchon 19 et l'un au moins des flasques 31, 32 va à présent être décrite en référence aux figures 1-2 et 3A-3B.

Hormis une portion radiale 31a ou 32a de recouvrement des faces axiales 20a, 20b respectives du média filtrant 20, chacun des flasques 31 et 32 présente une portion s'étendant dans l'espace intérieur 9 pour, structurer l'élément filtrant 15 (connexion inter-flasques) d'une part, et pour assurer une liaison mécanique robuste avec le manchon 19 d'autre part. Pour permettre cette liaison mécanique, l'élément filtrant 15 présente une pluralité de surfaces de contact SC, SC' (à reliefs et typiquement répartis de façon discontinue autour de l'axe central A) formées dans l'espace intérieur 9.

En référence aux figures 1 et 3A-3B, le premier flasque 31 présente des premières surfaces de contact SC (de ladite pluralité de surfaces de contact) définies par une partie d'ancrage 35 qui s'étend longitudinalement vers le deuxième flasque 32 depuis la portion radiale 31a (qui est ici sensiblement plane) du premier flasque 31. Des échancrures 36 sont formées dans la partie d'ancrage 35 pour permettre une circulation de gaz selon une direction radiale. Entre deux échancrures 36 adjacentes, une projection 38 en saillie radialement vers l'intérieur est formée sur la face interne F1 de la partie d'ancrage 35. La partie d'ancrage 35 réduit peu la section de passage délimitée par la portion radiale 31a du premier flasque 31 (au niveau de l'ouverture 33 prévue pour l'insertion du manchon 19 dans l'espace intérieur 9). La partie d'ancrage peut ainsi s'étendre dans l'espace intérieur 9 longitudinalement autour du manchon 19 dans un état assemblé, depuis la portion radiale 31a jusqu'à une zone d'extrémité plus proche de la portion radiale 32a du deuxième flasque 32 et également contenue dans l'espace intérieur 9.

Dans des variantes, les projections 38 ne sont pas positionnées dans la même zone circonférentielle que les échancrures 36.

On prévoit ici un nombre N de projections 38 qui est le même que le nombre de crans 22. Chaque projection 38 est configurée pour s'engager de façon ajustée dans l'un des crans 22, avec le même espacement circonférentiel d'une projection 38 à l'autre que pour les crans 22. Dans l'exemple illustré sur les figures 1 et 3A, on comprend que les projections 38 s'étendent latéralement de l'un à l'autre des bords longitudinaux B1, B2. Alternativement on peut prévoir une ou plusieurs fentes ou un évidement similaire défini de façon intermédiaire dans la projection 38. Autrement dit, une projection 38 qui coopère avec un cran 22 défini peut bien entendu se décomposer, dans des variantes, en au moins deux membres saillants dont l'un est engagé contre un premier des bords longitudinaux B1 et l'autre est engagé contre un deuxième des bords longitudinaux B2. Autrement dit, la définition du terme « projection » n'est pas restrictive et inclut le cas d'organes séparés qui font partie d'un même moyen d'engagement saillant radialement vers l'intérieur.

Comme bien visible sur les figures 1 et 3B, le manchon 19 peut comporter selon une option des portions de collet 40 formées dans une zone annulaire (zone localement élargie), ici distante de la portion de conduite PC, optionnellement prolongée axialement par une extension tubulaire 41 plus étroite sur laquelle est formée le deuxième bourrelet 26. L'extension tubulaire 41 délimite l'ouverture d'accès 42 du logement L. Les portions de collet 40 permettent de rehausser localement les bords longitudinaux B1 et B2 par rapport à la surface de fond 23, ce qui rend la liaison mécanique à effet anti-rotation plus robuste.

La partie d'ancrage 35 peut comporter une ou plusieurs paires de doigts 37a, 37b qui s'étendent longitudinalement dans l'espace intérieur 9, à l'état assemblé, depuis une portion tubulaire 31b du premier flasque 31 qui entoure l'ouverture centrale 33. Pour chaque paire, les doigts 37a, 37b sont espacés par une fente longitudinale 37c, proximale par rapport à l'ouverture centrale 33. Le deuxième flasque 32 comprend un ou plusieurs organes de retenue 44, 45 en prise avec la partie d'ancrage 35. Ces organes de retenue 44, 45 qui s'étendent dans l'espace intérieur 9 à l'état assemblé, en direction de l'ouverture centrale 33 du premier flasque 31, peuvent s'engager dans les fentes longitudinales 37c ou évidements similaires qui débouchent axialement vers l'ouverture 34 du deuxième flasque 32. Le ou les organes de retenue 44, 45 permettent de rendre solidaires en rotation les premier et deuxième flasques 31, 32, comme bien visible sur les figures 3A-3B.

Dans l'exemple non limitatif des figures 1-2 et 3A-3B, quatre organes de retenue 44, 45 qui s'étendent ici à distance de la portion de conduite PC en entourant la portion de raccordement PC, définissent des deuxièmes surfaces de contact SC' pour la liaison mécanique avec le manchon 19. Plus particulièrement, chacun des organes de retenue 44, 45 peut comporter une portion rigide 46 d'indexation en rotation, adaptée pour remplir une extrémité 22a des crans 22 dans ledit état assemblé. La portion rigide 46 présente typiquement deux arêtes vives (ici par liaison entre des faces adjacentes disposées à un angle θ de 90° l'une par rapport à l'autre ; plus généralement et de manière non limitative, deux connexions de surface avec un angle θ non supérieur à 90 ou 100° peuvent permettre de définir les surface de contact anguleuses SC et SC').

Ainsi chacun des organes de retenue 44, 45 peut être, ici en position adjacente à l'une des projections 38 (ou moyens d'engagement comparables), reçu de façon ajustée dans l'un des crans 22. Les organes de retenue 44, 45 s'étendent latéralement (au moins au niveau de leur portion rigide 46) de l'une à l'autre de deux portions de collet 40 adjacentes dans l'état assemblé avec le manchon (cf. figure 3B). Bien entendu, la portion rigide 46 peut le cas échéant se décomposer en plusieurs sous-parties et/ou ne s'engager que contre l'un des bords longitudinaux du cran 22 associé, en particulier lorsque le nombre N de crans est supérieur ou égal à quatre. En complément ou en alternative, l'ajustement d'une projection 38 dans un cran 22 peut être obtenu par l'intermédiaire d'un des organes de retenue 44, 45, par exemple avec une complémentarité de forme entre la partie d'ancrage 35 et les organes de retenue 44, 45, qui permet de remplir un cran 22 en s'étendant de l'un à l'autre des bords longitudinaux B1 et B2.

Au moins une partie des organes de retenue 44 peut en outre comporter une extension longitudinale sous la forme d'une patte 47 élastiquement déformable de type clip. La patte 47 élastiquement déformable s'étend longitudinalement depuis la portion rigide 46 d'indexation en rotation jusqu'à une extrémité libre 47a (typiquement pourvue d'un ergot 44a) formant une butée 44b en prise avec un rebord 49 de la partie d'ancrage 35. Lors de l'assemblage des deux flasques 31 et 32, cette patte 47 permet, par écartement radial vers l'extérieur, un chevauchement temporaire entre l'extrémité libre 47a et une terminaison 37d qui interconnecte les doigts 37a, 37b d'une paire de doigts 37a, 37b, du côté opposé à l'ouverture centrale 33 du premier flasque 31. Les deux flasques 31 et 32 sont encliquetés entre eux lorsque la patte 47 s'étend entre la terminaison 37d et la portion tubulaire 31b et fait saillie radialement vers l'intérieur dans la fente longitudinale 37c.

Bien que les figures illustrent des fentes 37c formant des ouvertures pour le passage de gaz dans l'exemple des figures, avec un alignement entre les ouvertures radiales O et les fentes 37c et les échancrures 36, on comprend plus généralement que des évidements de retenue (qui débouchent radialement vers l'extérieur) peuvent permettre de recevoir un ergot 44a formé à l'extrémité libre 47a de la patte 47.

Lorsque le manchon 19 est inséré dans l'espace intérieur 9 au travers de l'ouverture centrale 33, on réalise un déplacement linéaire de ce manchon 19 dans la zone centrale délimitée par la partie d'ancrage 35 (zone centrale bien visible sur la figure 3A). Pendant cette insertion, les crans 22 sont engagés par les première et deuxième surface de contact SC et SC'. Les N crans 22 débouchent axialement du côté de la deuxième face 20b (i.e. vers le deuxième flasque 32 lorsque les crans 22 ont déjà été insérés dans l'espace intérieur 9) pour permettre d'abord l'insertion de la projection 38 puis, pour au moins une partie des crans 22, de la portion rigide 46 des organes de retenue 44. Autrement dit, la portion rigide 46 vient occuper le cran 22 à la suite de la projection 38 qui est ici définie dans la terminaison 37d.

Selon une forme de réalisation nullement limitative, les deux organes de retenue 44 qui présentent la patte élastiquement déformable 47 sont typiquement diamétralement opposés par rapport à l'ouverture centrale 34 du deuxième flasque 32. Deux autres organes de retenue 45 formés dans le deuxième flasque 32 peuvent chacun présenter essentiellement une portion rigide 46 d'indexation en rotation.

Plus généralement, on prévoit qu'un ou plusieurs des organes de retenue 44, 45 s'engage contre un relief anti-rotation, par exemple défini par une fente longitudinale 37c, de la partie d'ancrage 35 et optionnellement dans l'un des crans 22 défini sur la face externe F du manchon 19. Alternativement, une fente à effet anti-rotation peut être formée dans le deuxième flasque 32.

On comprend aussi que les premières et deuxièmes surfaces de contact SC et SC' utilisées respectivement dans le premier flasque 31 et le deuxième flasque 32 peuvent être inversées pour tout ou partie. Ainsi dans une variante de l'exemple illustré sur les figures 1-4, tout en conservant dans le deuxième flasque 32 la jupe interne 320 qui est utilisée pour le contact étanche avec le deuxième bourrelet 26 ou surface d'étanchéité analogue de l'élément de rotor 18, il peut être prévu d'utiliser des projections 38 ou moyens d'engagement similaires dans le deuxième flasque 32 et de former des organes de retenue 44, 45 dans le premier flasque 31.

Optionnellement, lorsqu'une jupe interne 320 est prévue dans le deuxième flasque 32, celle-ci est espacée par rapport à la portion radiale 32a en délimitant une gorge annulaire 39. Des entretoises peuvent permettre de cloisonner la gorge annulaire 39, afin de limiter les déformations radiales de la jupe interne autour de l'ouverture 34. Cela rigidifie ainsi la jupe interne 320, qui peut également servir de butée axiale pour un épaulement 48 prévu sur l'arbre 11.

En référence aux figures 4 et 7, on voit que deux moyens de butée opposés, typiquement sous la forme de reliefs radialement saillant pour former un épaulement ou au moins une butée axiale, peuvent être formés respectivement sur l'arbre d'entrainement 11 et l'élément de rotor 18. Ces moyens de butée s'étendent ici en dehors de l'espace intérieur 9, sans que cette option soit limitative. Ainsi dans l'état assemblé tel qu'illustré sur la figure 2, l'élément de rotor 18 comporte un épaulement 18a, ici intégralement formé avec le manchon 19 (dans un collet 19d), venant en butée axiale contre la portion radiale 31a du premier flasque 31 en dehors de l'espace intérieur 9.

Cette disposition permet à l'élément filtrant 15 d'être bloqué axialement par l'arbre d'entraînement 11 lorsque l'élément de rotor 18 est lui-même fixé à l'extrémité 11a d'ancrage. Ceci est avantageux car il n'est alors pas nécessaire de prévoir des pattes 47 particulièrement robustes pour la retenue axiale inter-flasques et/ou le nombre de pattes 47 peut être réduit (une seule patte 47 pouvant suffire).

En référence aux figures 5 et 6, on peut voir que le nombre N de crans peut être réduit à deux. La partie d'ancrage 35 reste sensiblement inchangée, hormis la disparition de deux fentes longitudinales 37c par rapport à l'exemple de la figure 3B, de façon à former des pattes de guidage 50 sans projection 38. L'extrémité en fourche 50a, 50b des pattes de guidage 50 peut permettre une complémentarité de forme avec un organe de retenue 45 venant s'engager axialement dans le passage défini par la fourche 50a, 50b.

Dans une variante avec quatre rainures ou crans 22 dans le manchon 19, la fourche 50a, 50b forme une paire d'ergots qui font saillie radialement vers l'intérieur par rapport à la face interne F1 et l'espace entre ces ergots est rempli par l'extrémité complémentaire d'un organe de retenue 45. Le double effet anti-rotation inter-flasques, et entre l'élément filtrant et le manchon 19 peut alors aussi être obtenu (avec une structure d'élément filtrant qui peut minimiser le nombre de pièces).

Un premier exemple de séparation va à présent être décrit en référence à la figure 4.

Dans ce cas, il et prévu une filtration de type centripète, pour laquelle le média filtrant 20 comporte au moins une surface d'entrée 53 externe, par laquelle arrivent les gaz non traités G dans la zone amont Z1, et au moins une surface de sortie définie par la face interne 20c, par laquelle les gaz traités GP ressortent. Le média 20 s'étend entre ces deux surfaces 53, 20c, avec une épaisseur et une composition adaptées suivant l'efficacité désirée et la perte de charge tolérable. Le média 20 est du type coalesceur avec, par exemple, un agencement de plis de type plissé droit, courbe, chevron ou enroulé.

L'agencement d'élément filtrant 100 s'étend dans une chambre de filtration d'un boîtier 60 qui comporte une entrée pour l'admission de gaz non traités G et une sortie S pour évacuer les gaz traités GP. Le boîtier 60 présente un passage pour l'arbre d'entraînement 11 aligné avec l'axe Y de rotation, l'extrémité 11a de l'arbre d'entraînement 11 s'étendant dans l'espace intérieur 9 en étant entouré par la portion de raccordement PR de l'élément de rotor 18.

Pour faire passer un fluide de la zone amont Z1 qui communique avec le carter moteur à la zone aval Z2, il est nécessaire de passer à travers le média 20 de l'élément filtrant 15. Dans l'exemple de la figure 4, un joint dynamique 16 en contact avec la portion de conduite PC forme une interface (avec étanchéité tournante) entre la partie stator et la partie rotor, permettant de séparer la zone amont Z1 de la zone aval Z2. Dans la zone aval Z2, les gaz traités GP circulent dans la portion de conduite PC et sont déviés au moins une fois vers une sortie S qui communique avec l'admission d'air. La sortie S est ici définie dans une partie amovible.

La sortie S peut être définie par un conduit d'un couvercle 61 formant partie du boîtier 60. La cavité ou chambre de filtration peut être ouverte en retirant le couvercle 61. Le joint dynamique 16 peut faire partie de ce couvercle 61. Au moins un joint torique assure par exemple l'étanchéité de la fixation entre ce couvercle 61 et le reste du boîtier 60, en complément du joint dynamique 16. Un autre joint dynamique J, placé à l'opposé du joint dynamique 16, enserre l'arbre 11 qui traverse une paroi P du boîtier 60.

A l'entrée du média filtrant 20, ressortent des gouttes d'huile HG dont la taille est suffisamment importante pour subir la force centrifuge liée à la rotation de la partie rotor autour de l'axe Y (ici confondu avec l'axe central A). Des fibres du média 20 permettent de réaliser la coalescence des microgouttelettes d'huile arrivant du côté amont Z1 par interception, sédimentation, impact inertiel ou diffusion brownienne sur les fibres, de sorte que les particules d'huile doivent se regrouper pour former de plus grosses gouttes HG.

Les gouttes d'huile HG séparées des gaz sont avantageusement rejetées en permanence du coté des gaz non purifiés. Les gouttes d'huile HG s'évacuent simplement par gravité vers une canalisation de drainage (non représenté sur la figure 4).

La partie rotor du dispositif 10 peut comporter une liaison d'entraînement avec un moteur électrique à vitesse de rotation programmable. La vitesse de rotation est ainsi modulable en fonction des paramètres pertinents.

Le mode de séparation d'huile des gaz de carter décrit précédemment à titre illustratif n'est pas limitatif quand à la portée de l'invention. Ainsi, l'homme du métier pourra également réaliser et appliquer l'invention à un dispositif d'épuration des gaz carter qui utilise un sens de circulation inverse, avec la zone amont Z1 (communiquant avec le carter moteur) délimitée par l'espace intérieur 9 de l'élément filtrant 15 et la zone adjacente à un conduit d'entrée.

Un deuxième exemple de séparation avec un sens de circulation inverse va à présent être décrit en référence à la figure 7.

L'axe de rotation Y peut être horizontal, et la zone aval Z2 de gaz traités GP qui communique avec la sortie S peut alors être définie par l'espace périphérique autour de l'élément filtrant 15. Dans ce cas, on peut prévoir dans la chambre de filtration une zone haute qui est adjacente au conduit de sortie S (latéralement décalé par rapport à l'élément filtrant 15) et une zone basse de récupération d'huile.

Ici, les gaz de carter G entrent dans la zone amont Z1 par le couvercle 61 via la portion de conduite PC. Une étanchéité tournante est assurée via le joint dynamique 16 entre un conduit d'entrée du couvercle 61 et l'extrémité 19c du manchon 19 ou extrémité cylindrique similaire de l'élément de rotor 18. Dans l'exemple représenté, ce joint 16 et au moins une partie de la portion de conduite PC permettent de séparer le passage d'arrivée de gaz G dans la zone amont Z1 du passage d'évacuation de la zone aval Z2. A l'opposé de la sortie S, un joint dynamique supplémentaire J est prévu entre l'extrémité 11a d'entraînement en rotation et une paroi P de la partie stator. Cette paroi P est typiquement perpendiculaire à l'axe Y de rotation.

On comprend que les gaz non traités G vont suivre à l'intérieur du média 20 un chemin qui s'éloigne de l'axe central A (ici confondu avec l'axe y de rotation) et subissent donc l'effet de la force centrifuge à l'intérieur de ce média 12 lorsque l'élément de séparation 100 est mis en rotation. Du fait de la circulation de gaz dans le sens centrifuge, les gouttes d'huile HG peuvent être poussées par le flux de gaz combiné à la force centrifuge vers la surface extérieure du média filtrant 20.

A la sortie de ce média 20, ressortent les gaz traités GP, ainsi que des gouttes d'huile HG dont la taille est suffisamment importante pour subir la force centrifuge liée à la rotation de la partie rotor autour de l'axe A. Grâce à l'effet centrifuge, les gouttes d'huile HG de masse importante sont expulsées radialement vers la paroi périphérique PP du boîtier 60. Les gaz traités GP sont guidés vers un passage qui diverge par rapport au trajet des gouttes d'huile HG. Au niveau de la surface de sortie distale (périmètre extérieur), la section du média filtrant 20 coalesceur est importante, de sorte que les gaz traités GP sont ralentis et peuvent donc plus facilement s'écouler sans turbulences dans la zone aval Z2. Le guidage des gaz traités GP est permis grâce à la présence de parois de guidage. Les gouttes d'huile HG s'écoulent essentiellement par gravité le long de la paroi périphérique. La phase lourde formée par les gouttes d'huile HG se sépare efficacement de la phase légère formée par les gaz traités GP et on comprend qu'il n'y a pas de réentraînement d'huile vers la sortie S.

Comme dans le cas avec sens de circulation centripète des gaz de carter, un retour au carter de l'huile drainée peut se faire notamment de deux façons. L'huile peut redescendre via un tuyau souple ou toute canalisation de drainage 24 débouchant sous le niveau d'huile, comme illustré à la figure 7. Alternativement, l'huile est stockée dans une cuve formant réservoir tampon qui se vide à l'arrêt via un clapet.

Par ailleurs, des pales optionnelles peuvent être formées sur l'arbre 11 et/ou sur un flasque 31 ou 32 de l'élément filtrant 15. De tels éléments d'aérodynamique pour créer un effet d'aspiration peuvent être placés, en fonction de l'orientation des pales et du sens de rotation de l'arbre 11, soit à proximité de la sortie S, soit à l'opposé de la sortie S. L'aspiration ainsi créée permet une diminution de la perte de charge de l'élément filtrant 15 à faible régime de rotation et forts débits gazeux. De telles pales peuvent être formées intégralement avec le deuxième flasque 32, par exemple par moulage. On peut ainsi prévoir un agencement d'élément filtrant 100 de type amovible avec ou sans pales 50.

Un des avantages de l'agencement d'élément filtrant 100 est de permettre une séparation très efficace des gaz de carter en réduisant les pertes de charge liées à la présence d'huile par rapport à un coalesceur statique, sans complexité de conception de la partie rotor qui peut être amovible. La simplification du dispositif permet d'en accroître la fiabilité.

Un autre des avantages d'un dispositif selon l'invention est qu'il peut être placé en dehors du carter de distribution, de sorte qu'il n'est plus soumis aux éclaboussures et arrivées massives d'huile. Il en résulte moins de pics de perte de charge et une meilleure évacuation de l'huile.

Il doit être évident pour les personnes versées dans l'art que la présente invention permet des modes de réalisation sous de nombreuses autres formes spécifiques sans l'éloigner du domaine d'application de l'invention comme revendiqué. Ainsi, les flasques 31 et 32 peuvent être assemblés entre eux en utilisant tout mode de fixation approprié, l'encliquetage correspondant à une option préférée (mais non limitative) pour rendre l'assemblage de l'élément filtrant 15 particulièrement simple.

## Revendications

1. Agencement d'élément filtrant (100) pour dispositif (10) d'épuration d'un gaz issu d'un carter de moteur à combustion interne, l'agencement comportant :
- un élément filtrant (15) qui présente un média filtrant (20) annulaire, en particulier pourvu d'un média coalesceur, s'étendant longitudinalement entre une première face axiale (20a) et une deuxième face axiale (20b) autour d'un axe central (A), le média filtrant ayant une face interne (20c) qui délimite un espace intérieur (9) ;
- un élément de rotor (18) destiné à l'entrainement en rotation de l'élément filtrant (15), engagé dans l'espace intérieur (9) contre une pluralité de surfaces de contact (SC, SC') de l'élément filtrant dans un état assemblé entre l'élément de rotor (18) et l'élément filtrant (15) ;
**caractérisé en ce que** l'élément de rotor (18) comporte un manchon (19) monobloc qui s'étend longitudinalement autour de l'axe central (A) à l'état assemblé et présente une face externe sur laquelle sont formés N crans (22) délimités chacun entre deux bords longitudinaux (B1, B2), le manchon (19) étant adapté pour être inséré dans l'espace intérieur (9) ;
**et en ce que** l'élément filtrant (15) comprend un premier flasque (31) recouvrant ladite première face axiale (20a), le premier flasque (31) comprenant une partie d'ancrage (35) qui s'étend dans l'espace intérieur longitudinalement autour du manchon (19) vers un deuxième flasque (32) de l'élément filtrant, des premières surfaces de contact (SC) de ladite pluralité de surfaces de contact étant espacées et définies par la partie d'ancrage (35) qui présente N moyens d'engagement en saillie radialement vers l'intérieur pour s'engager de façon ajustée dans les N crans (22), N étant un nombre entier supérieur ou égal à deux, le deuxième flasque (32) comprenant au moins un organe de retenue (44, 45) en prise avec la partie d'ancrage (35) et permettant de rendre solidaires en rotation les premier et deuxième flasques (31, 32).

2. Agencement selon la revendication 1, dans lequel le premier flasque (31) présente une première ouverture centrale (33) permettant l'insertion du manchon (19) dans l'espace intérieur (9), le deuxième flasque (32) comprenant deux organes de retenue (44, 45) espacés en prise avec la partie d'ancrage (35) et permettant de rendre solidaires en rotation les premier et deuxième flasques (31, 32).

3. Agencement selon la revendication 2, dans lequel le manchon (19) comprend une portion de conduite (PC) conçue pour faire circuler un flux de gaz dans l'espace intérieur (9) vers ou depuis la face interne (20c) du média filtrant (20), la portion de conduite (PC) faisant saillie axialement vers l'extérieur depuis le premier flasque (31), lesdits deux organes de retenue s'étendant à l'état assemblé à distance de la portion de conduite (PC) et définissant des deuxièmes surfaces de contact (SC') de ladite pluralité de surfaces de contact (SC, SC').

4. Agencement selon la revendication 2 ou 3, dans lequel les deux organes de retenue (44) sont en contact de façon respective avec la partie d'ancrage (35) de façon respective dans deux zones de chevauchement entre le premier flasque (31) et le deuxième flasque (32), les deux organes de retenue (44) comportant chacun :
- une portion rigide (46) d'indexation en rotation, adaptée pour remplir une extrémité (22a) des N crans (22) dans ledit état assemblé ; et
- une patte (47), élastiquement déformable, qui s'étend longitudinalement depuis la portion rigide (46) d'indexation en rotation jusqu'à une extrémité libre (47a) formant une butée en prise avec la partie d'ancrage (35).

5. Agencement selon la revendication 4, dans lequel la partie d'ancrage (35) comporte deux évidements de retenue (37c) débouchant chacun radialement vers l'extérieur et placés respectivement en position adjacente à deux projections (38) déterminées qui définissent deux des moyens d'engagement, l'extrémité libre (47a) de la patte (47) présentant un ergot (44a) qui fait saillie radialement vers l'intérieur depuis une face interne de la patte et adapté pour être reçu dans un évidement correspondant des deux évidements de retenue (37c).

6. Agencement selon l'une quelconque des revendications 2 à 5, dans lequel les deux organes de retenue (44) sont diamétralement opposés par rapport à une ouverture centrale (34) du deuxième flasque (32), une ou deux portions (46) d'indexation en rotation, distinctes des deux organes de retenue (44), étant en outre formées dans le deuxième flasque (32).

7. Agencement selon l'une quelconque des revendications 2 à 6, dans lequel le manchon (19) comprend des portions de collet (40) formées dans une première zone annulaire, les portions de collet permettant de rehausser localement les bords longitudinaux (B1, B2), chacun des deux organes de retenue (44, 45) étant reçu, en position adjacente à l'un des N moyens d'engagement, dans l'un des N crans (22) et s'étendant latéralement de l'une à l'autre de deux portions de collet (40) adjacentes dans ledit état assemblé.

8. Agencement selon la revendication 7, dans lequel le manchon (19) comporte :
- une extrémité (19c) saillante axialement vers l'extérieur par rapport au premier flasque (31) ; et
- des ouvertures radiales (O) dans une deuxième zone annulaire intermédiaire entre l'extrémité saillante et une paroi transversale (19a), les ouvertures radiales (O) formant partie d'une portion de conduite (PC) conçue pour faire circuler un flux de gaz dans l'espace intérieur (9) vers ou depuis la face interne (20c) du média filtrant (20).

9. Agencement selon la revendication 7 ou 8, dans lequel la partie d'ancrage (35) comporte une paire de doigts (37a, 37b) qui s'étendent longitudinalement dans l'espace intérieur (9) depuis une portion tubulaire (31b) du premier flasque (31) entourant l'ouverture centrale (33), sachant que dans ladite paire, les doigts sont espacés par une fente longitudinale (37c), proximale par rapport à l'ouverture centrale (33), l'un des deux organes de retenue (44, 45) s'étendant au moins en partie dans la fente longitudinale (37c) et étant enserré entre deux portions de collet adjacentes (40),
et dans lequel il est préférentiellement prévu que :
- les N moyens d'engagement soient définis par N projections (38),
- les doigts (37a, 37b) de la paire soient connectés par une terminaison commune (37d), distale par rapport à l'ouverture centrale (33), qui définit une des N projections (38).

10. Agencement selon l'une quelconque des revendications précédentes, dans lequel le manchon (19) est métallique et comprend en outre :
- une portion (PR) de raccordement à un arbre d'entraînement (11) ;
- une paroi transversale (19a) s'étendant entre une portion de conduite (PC) pour faire circuler des gaz et la portion (PR)de raccordement ; et
- au moins un orifice axial (19b) dans la paroi transversale (19a) permettant le passage d'un organe d'attache allongé tel qu'une vis (V).

11. Agencement selon l'une quelconque des revendications précédentes, dans lequel chacun des N crans (22) du manchon (19) comporte une surface de fond (23) sensiblement plane, N étant préférentiellement égal à quatre.

12. Agencement selon l'une quelconque des revendications précédentes, dans lequel le manchon (19) est métallique et présente une première surface annulaire d'étanchéité, de préférence formée par un premier bourrelet (25), et une deuxième surface annulaire d'étanchéité, de préférence formée par un deuxième bourrelet (26), chacune des première et deuxième surfaces annulaires d'étanchéité étant formée sur ladite face externe (F) de part et d'autre des N crans (22).

13. Agencement selon l'une quelconque des revendications précédentes, dans lequel les N crans (22) débouchent axialement du côté de la deuxième face (20b) dans ledit état assemblé, l'élément de rotor (18) comportant un épaulement (18a) venant en butée axiale contre le premier flasque (31) en dehors de l'espace intérieur (9).

14. Dispositif (10) d'épuration d'un gaz issu d'un carter de moteur à combustion interne, comprenant l'agencement d'élément filtrant (100) défini dans l'une quelconque des revendications précédentes, le dispositif comprenant en outre :
- un arbre (11) d'entraînement en rotation qui définit un axe (Y) de rotation et présente une extrémité d'ancrage (11a) pour fixer l'élément de rotor (18) avec un même alignement selon l'axe (Y) de rotation qui coïncide sensiblement avec l'axe central (A) du média filtrant (20) ;
- un boîtier (60) qui comporte une entrée pour l'admission de gaz non traités (G), une sortie (S) pour évacuer les gaz traités (GP), et un passage pour l'arbre d'entraînement aligné avec l'axe (Y) de rotation, l'extrémité d'ancrage (11a) s'étendant dans l'espace intérieur (9) en étant entouré par une portion (PR) de raccordement de l'élément de rotor (18) ; et
- deux moyens de butée opposés (48, 18a) formés respectivement sur l'arbre d'entrainement (11) et l'élément de rotor (18), de préférence à l'extérieur de l'espace intérieur (9), permettant à l'élément filtrant (15) d'être bloqué axialement par rapport à l'arbre d'entraînement (11) lorsque l'élément de rotor (18) est fixé à l'extrémité d'ancrage (11a).

15. Procédé d'assemblage d'un agencement d'élément filtrant (100) selon l'une des revendications 1 à 13, comportant les étapes consistant essentiellement à :
- fixer un premier flasque (31) à un deuxième flasque (32) dans un espace intérieur (9) délimité par une face interne (20c) d'un média filtrant (20) coalesceur de format annulaire, en mettant en prise au moins un organe de retenue (44) appartenant au deuxième flasque (32) avec une partie d'ancrage (35) appartenant au premier flasque (31) et permettant de rendre solidaires en rotation les premier et deuxième flasques, ce grâce à quoi un élément filtrant (15) est obtenu ;
- insérer dans l'espace intérieur (9) un manchon (19) monobloc destiné à l'entrainement en rotation de l'élément filtrant (15), en insérant le manchon au travers d'une ouverture centrale (33) définie par le premier flasque (31) ;
- rendre solidaires en rotation le manchon (19) et l'élément filtrant (15), en engageant dans N crans (22) d'une surface externe (F) du manchon (19), N projections (38) espacées formées dans la partie d'ancrage (35) qui font saillie radialement vers l'intérieur depuis une face interne (F1) de l'élément filtrant (15), N étant un nombre entier supérieur ou égal à deux, l'engagement étant réalisé lors de l'insertion du manchon (19) selon un déplacement linéaire, sachant que lorsqu'il est inséré dans l'espace intérieur (9), le manchon (19) est disposé de façon à ce que les N crans (22) débouchent axialement en direction du deuxième flasque (32).

## Patentansprüche

1. Filterelementanordnung (100) für eine Reinigungsvorrichtung (10) zum Reinigen eines aus dem Kurbelgehäuse einer Brennkraftmaschine ausströmenden Gases, wobei die Anordnung aufweist:
- ein Filterelement (15), das ein ringförmiges, insbesondere mit einem Coalescer-Medium versehenes Filtermedium (20) aufweist, das sich in Längsrichtung zwischen einer ersten axialen Fläche (20a) und einer zweiten axialen Fläche (20b) um eine zentrale Achse (A) erstreckt, wobei das Filtermedium eine Innenfläche (20c) hat, die einen Innenraum (9) begrenzt;
- ein Rotorelement (18), das konfiguriert ist, um das Filterelement (15) in Drehung mitzunehmen und in einem montierten Zustand in dem Innenraum (9) des Filterelements in Eingriff mit mehreren Kontaktflächen (SC, SC') zwischen dem Rotorelement (18) und dem Filterelement (15) ist;
**dadurch gekennzeichnet, dass** das Rotorelement (18) eine integrale Muffe (19) aufweist, die sich im montierten Zustand in Längsrichtung um die zentrale Achse (A) erstreckt und eine Außenfläche aufweist, an welcher N Kerben (22) gebildet sind, die jeweils von zwei Längskanten (B1, B2) begrenzt sind, wobei die Muffe (19) konfiguriert ist, um in den Innenraum (9) eingesetzt zu werden;
und dadurch, dass das Filterelement (15) einen ersten Flansch (31) aufweist, der die erste axiale Fläche (20a) bedeckt, wobei der erste Flansch (31) einen Verankerungsteil (35) aufweist, der sich in dem Innenraum in Längsrichtung um die Muffe (19) hin zu einem zweiten Flansch (32) des Filterelements erstreckt, wobei der Verankerungsteil (35) erste Kontaktflächen (SC) der mehreren Kontaktflächen beabstandet und begrenzt und N Eingriffsmittel aufweist, die radial einwärts vorspringen, um auf geeignete Weise in die N Kerben (22) zu greifen, wobei N eine ganze Zahl größer oder gleich zwei ist, wobei der zweite Flansch (32) mindestens ein Halteelement (44, 45) im Eingriff mit dem Verankerungsteils (35) aufweist, was erlaubt, den ersten und zweiten Flansch (31, 32) drehstarr miteinander zu verbinden.

2. Anordnung nach Anspruch 1, in welcher der erste Flansch (31) eine erste zentrale Öffnung (33) aufweist, die das Einsetzen der Muffe (19) in den Innenraum (9) erlaubt, wobei der zweite Flansch (32) zwei beabstandete Halteelemente (44, 45) im Eingriff mit dem Verankerungsteil (35) aufweist, was erlaubt, den ersten und zweiten Flansch (31, 32) drehstarr miteinander zu verbinden.

3. Anordnung nach Anspruch 2, in welcher die Muffe (19) einen Leitungsabschnitt (PC) aufweist, der konfiguriert ist, um in dem Innenraum (9) einen Gasstrom hin zu oder weg von der Innenfläche (20c) des Filtermediums (20) zirkulieren zu lassen, wobei der Leitungsabschnitt (PC) von dem ersten Flansch (31) aus axial nach außen vorspringt, wobei im montierten Zustand die zwei Halteelemente sich im Abstand von dem Leitungsabschnitt (PC) erstrecken und zweite Kontaktflächen (SC') der mehreren Kontaktflächen (SC, SC') definieren.

4. Anordnung nach Anspruch 2 oder 3, in welcher die zwei Halteelemente (44) in zwei jeweiligen Überlappungszonen, in welchen sich der erste Flansch (31) und der zweite Flansch (32) überlappen, in jeweiligen Kontakt mit dem Verankerungsteil (35) sind, wobei jedes der zwei Halteelemente (44) aufweist:
- einen starren Rotationsindexabschnitt (46), der konfiguriert ist, um im montierten Zustand ein Ende (22a) der N Kerben (22) zu füllen; und
- eine elastisch verformbare Lasche (47), die sich in Längsrichtung von dem starren Rotationsindexabschnitt (46) zu einem freien Ende (47a) erstreckt, das einen Anschlag im Eingriff mit dem Verankerungsteil (35) bildet.

5. Anordnung nach Anspruch 4, in welcher der Verankerungsteil (35) zwei Halteaussparungen (37c) aufweist, die jeweils radial nach außen ausmünden und jeweils angrenzend an zwei bestimmte Vorsprünge (38), die zwei Eingriffsmittel definieren, positioniert sind, wobei das freie Ende (47a) der Lasche (47) eine Nase (44a) aufweist, die von der Innenfläche der Lasche aus radial nach innen vorspringt und konfiguriert ist, um in einer entsprechenden Aussparung der zwei Halteaussparungen (37c) aufgenommen zu werden.

6. Anordnung nach einem der Ansprüche 2 bis 5, in welcher die zwei Halteelemente (44) sich bezüglich einer zentralen Öffnung (34) des zweiten Flansches (32) diametral gegenüberliegen, wobei ferner einer oder zwei Rotationsindexabschnitte (46), die verschieden von den Halteelementen (44) sind, in dem zweiten Flansch (32) gebildet ist.

7. Anordnung nach einem der Ansprüche 2 bis 6, in welcher die Muffe (19) Kragenabschnitte (40) aufweist, die in einer ersten ringförmigen Zone gebildet sind, wobei die Kragenabschnitte eine örtliche Erhöhung der Längskanten (B1, B2) erlauben, wobei im montierten Zustand jedes der zwei Halteelemente (44, 45), in angrenzender Position an eines der N Eingriffsmittel, in einer der N Kerben (22) aufgenommen ist und sich seitlich von einem zum anderen von zwei benachbarten Kragenabschnitten erstreckt.

8. Anordnung nach Anspruch 7, wobei die Muffe (19) aufweist:
- ein Ende (19c), das bezüglich des ersten Flansches (31) axial nach außen vorspringt; und
- radiale Öffnungen (O) in einer zweiten ringförmigen Zone zwischen dem vorspringenden Ende und einer transversalen Wand (19a), wobei die radialen Öffnungen (O) Teil eines Leitungsabschnitts (PC) sind, der konfiguriert ist, um in dem Innenraum (9) einen Gasstrom hin zu oder weg von der Innenfläche (20c) des Filtermediums (20) zirkulieren zu lassen.

9. Anordnung nach Anspruch 7 oder 8, in welcher der Verankerungsteil (35) ein Paar Finger (37a, 37b) aufweist, die sich in dem Innenraum (9) von einem die zentrale Öffnung (33) umgebenden rohrförmigen Abschnitt (31b) des ersten Flansches (31) in Längsrichtung erstrecken, wobei in dem Paar die Finger durch einen bezüglich der zentralen Öffnung (33) proximalen Längsschlitz (37c) getrennt sind, wobei eines der zwei Halteelemente (44, 45) sich mindestens teilweise in dem Längsschlitz (37c) erstreckt und zwischen zwei benachbarten Kragenabschnitten (40) eingeschlossen ist,
und in welcher vorzugsweise vorgesehen ist, dass:
- die N Eingriffsmittel durch N Vorsprünge (38) definiert sind,
- die Finger (37a, 37b) des Paars über einen bezüglich der zentralen Öffnung (33) distalen gemeinsamen Endabschnitt (37d) miteinander verbunden sind und der Endabschnitt einen der N Vorsprünge (38) bildet.

10. Anordnung nach einem der vorstehenden Ansprüche, in welcher die Muffe (19) metallisch ist und ferner aufweist:
- einen Verbindungsabschnitt (PR) zum Verbinden mit einer Antriebswelle (11);
- eine Querwand (19a), die sich zwischen einem Leitungsabschnitt (PC) für Gaszirkulation und dem Verbindungsabschnitt (PR) erstreckt; und
- mindestens eine axiale Öffnung (19b) in der Querwand (19a), die das Hindurchführen eines länglichen Befestigungselements, wie beispielsweise einer Schraube (V), erlaubt.

11. Anordnung nach einem der vorstehenden Ansprüche, in welcher jede der N Kerben (22) der Muffe (19) eine im Wesentlichen ebene Bodenfläche (23) aufweist, wobei N vorzugsweise gleich vier ist.

12. Anordnung nach einem der vorstehenden Ansprüche, in welcher die Muffe (19) metallisch ist und eine erste ringförmige Dichtungsfläche, die vorzugsweise von einem ersten Wulst (25) gebildet ist, und eine zweite ringförmige Dichtungsfläche, die vorzugsweise von einem zweiten Wulst (26) gebildet ist, aufweist, wobei sowohl die erste als auch die zweite ringförmige Dichtungsfläche an der Außenfläche (F) beiderseits der N Kerben (22) gebildet ist.

13. Anordnung nach einem der vorstehenden Ansprüche, in welcher im montierten Zustand die N Kerben (22) auf Seite der zweiten Fläche (20b) axial ausmünden, wobei das Rotorelement (18) eine Schulter (18a) aufweist, die außerhalb des Innenraums (9) in axialen Anschlag an den ersten Flansch (31) kommt.

14. Reinigungsvorrichtung (10) zum Reinigen eines aus dem Kurbelgehäuse einer Brennkraftmaschine ausströmenden Gases, aufweisend die in einem der vorstehenden Ansprüche definierte Filterelementanordnung (100), wobei die Vorrichtung ferner aufweist:
- eine Rotationsantriebswelle (11), die eine Rotationsachse (Y) definiert und ein Verankerungsende (11a) aufweist, um das Rotorelement (18) in einer gleichen Ausrichtung mit der Rotationsachse (Y), die im Wesentlichen mit der zentralen Achse (A) des Filtermediums (20) zusammenfällt, anzubringen;
- ein Gehäuse (60), das einen Eingang zur Zufuhr von nichtbehandelten Gasen (G), einen Ausgang (S) zur Abfuhr der behandelten Gase (GP) und einen Durchgang für die mit der Rotationsachse (Y) ausgerichtete Antriebswelle aufweist, wobei das Verankerungselement (11a) sich in dem Innenraum (9) erstreckt und von einem Verbindungsabschnitt (PR) des Rotorelements (18) umgeben ist; und
- zwei gegenüberliegende Anschlageinrichtungen (48, 18a), die an der Antriebswelle (11) bzw. dem Rotorelement (18) vorzugsweise außerhalb des Innenraums (9) gebildet sind und erlauben, dass das Filterelement (15) bezüglich der Antriebswelle (11) axial blockiert ist, wenn das Rotorelement (18) an dem Verankerungsende (11a) befestigt ist.

15. Verfahren zum Montieren einer Filterelementanordnung (100) nach einem der Ansprüche 1 bis 13, mit den Schritten, die im Wesentlichen bestehen aus:
- Befestigen eines ersten Flansches (31) an einem zweiten Flansch (32) in einem von einer Innenfläche (20c) eines ringförmigen Coalescer-Filtermediums (20) begrenzten Innenraum (9) dadurch, dass mindestens ein dem zweiten Flansch (32) zugehöriges Halteelement (44) mit einem dem ersten Flansch (31) zugehörigen Verankerungsteil (35) in Eingriff gebracht wird, was erlaubt, den ersten und zweiten Flansch drehstarr miteinander zu verbinden, womit ein Filterelement (15) bereitgestellt ist;
- Einsetzen einer einstückigen Muffe (19), die konfiguriert ist, um das Filterelement (15) in Drehung mitzunehmen, in den Innenraum (9), wobei die Muffe durch eine von dem ersten Flansch (31) definierte zentrale Öffnung (33) eingesetzt wird;
- Herstellen einer drehstarren Verbindung der Muffe (19) und des Filterelements (15) durch Ineingriffbringen von N in dem Verankerungselement (35) gebildeten beabstandeten Vorsprüngen (38), die von einer Innenfläche (F1) des Filterelements (15) aus radial nach innen vorspringen, in N Kerben (22) einer Außenfläche (F) der Muffe (19), wobei N eine ganze Zahl größer oder gleich zwei ist, wobei das Ineingriffbringen beim Einsetzen der Muffe (19) gemäß einer linearen Verschiebung erfolgt, wobei, wenn sie in dem Innenraum (9) eingesetzt ist, die Muffe (19) derart angeordnet ist, dass die N Kerben (22) axial in Richtung des zweiten Flansches (32) ausmünden.

## Claims

1. A filtering element arrangement (100) for a device (10) for purifying emissions from a crankcase of an internal combustion engine, the arrangement comprising:
- a filtering element (15) which has an annular filtering medium (20), in particular provided with a coalescer medium, extending longitudinally around a central axis (A) between a first axial face (20a) and a second axial face (20b), the filtering medium having an internal face (20c) defining an inner space (9);
- a rotor element (18) intended for rotating the filtering element (15), engaged in the inner space (9) against a plurality of contact surfaces (SC, SC') of the filtering element in an assembled state between the rotor element (18) and the filtering element (15);
**characterized in that** the rotor element (18) has a one-piece sleeve (19) which extends longitudinally around the central axis (A) in the assembled state and has an external face on which are formed N notches (22) each defined between two longitudinal edges (B1, B2), the sleeve (19) being suitable for insertion into the inner space (9);
**and in that** the filtering element (15) comprises a first flange (31) covering said first axial face (20a), the first flange (31) comprising an anchoring part (35) which extends longitudinally into the inner space around the sleeve (19), towards a second flange (32) of the filtering element, first contact surfaces (SC) among said plurality of contact surfaces being spaced apart and defined by the anchoring part (35) which provides N engagement means projecting radially inwardly for engaging the N notches (22) in a fitted manner, N being an integer greater than or equal to two, the second flange (32) comprising at least one retaining member (44, 45) engaged with the anchoring part (35) and making it possible to render the first and second flanges (31, 32) integral in rotation.

2. Arrangement according to claim 1, wherein the first flange (31) provides a first central opening (33) enabling insertion of the sleeve (19) into the inner space (9), the second flange (32) comprising two spaced-apart retaining members (44, 45) engaged with the anchoring part (35) and rendering the first and second flanges (31, 32) rotationally integral.

3. Arrangement according to claim 2, wherein the sleeve (19) comprises a pipe portion (PC) designed to circulate a flow of gas in the inner space (9) towards or away from the internal face (20c) of the filtering medium (20), the pipe portion (PC) projecting axially outward from the first flange (31), said two retaining members in the assembled state extending distanced from the pipe portion (PC) and defining second contact surfaces (SC') among said plurality of contact surfaces (SC, SC').

4. Arrangement according to claim 2 or 3, wherein the two retaining members (44) are respectively in contact with the anchoring part (35) in two respective overlapping areas between the first flange (31) and the second flange (32), the two retaining members (44) each comprising:
- a rigid rotation-indexing portion (46) adapted to fill one end (22a) of the N notches (22) in said assembled state; and
- an elastically deformable tab (47) which extends longitudinally from the rigid rotation-indexing portion (46) to a free end (47a) forming a stop engaged with the anchoring part (35).

5. Arrangement according to claim 4, wherein the anchoring part (35) comprises two retaining recesses (37a) each opening radially outward and placed respectively adjacent to two determined projections (38) which define two of the engagement means, the free end (47a) of the tab (47) having a lug (44a) projecting radially inward from an internal face of the tab and adapted to be received in a corresponding recess of the two retaining recesses (37c).

6. Arrangement according to any one of claims 2 to 5, wherein the two retaining members (44) are diametrically opposed with respect to a central opening (34) of the second flange (32), one or two rotation-indexing portions (46), distinct from the two retaining members (44), further being formed in the second flange (32).

7. Arrangement according to any one of claims 2 to 6, wherein the sleeve (19) comprises collar portions (40) formed in a first annular region, the collar portions making it possible to locally raise the longitudinal edges (B1, B2), each of the two retaining members (44, 45) being received, in a position adjacent to one of the N engagement means, in one of the N notches (22) and extending laterally from one to the other of two adjacent collar portions (40) in said assembled state.

8. Arrangement according to claim 7, wherein the sleeve (19) comprises:
- an end (19c) projecting axially outward with respect to the first flange (31); and
- radial openings (O) in a second intermediate annular region between the projecting end and a transverse wall (19a), the radial openings (O) forming part of a pipe portion (PC) designed to circulate a flow of gas in the inner space (9) towards or away from the internal face (20c) of the filtering medium (20).

9. Arrangement according to claim 7 or 8, wherein the anchoring part (35) comprises a pair of fingers (37a, 37b) extending longitudinally in the inner space (9) from a tubular portion (31b) of the first flange (31) surrounding the central opening (33), the fingers of said pair being spaced apart by a longitudinal slot (37c) proximal to the central opening (33), one of the two retaining members (44, 45) extending at least partially into the longitudinal slot (37c) and being clamped between two adjacent collar portions (40),
and wherein, preferentially:
- the N engagement means are defined by N projections (38),
- the fingers (37a, 37b) of said pair are connected by a common termination (37d), distal to the central opening (33), which defines one of the N projections (38).

10. Arrangement according to any one of the preceding claims, wherein the sleeve (19) is of metal and further comprises:
- a portion (PR) for connecting to a drive shaft (11);
- a transverse wall (19a) extending between a pipe portion (PC) for circulating gases and the connecting portion (PR); and
- at least one axial orifice (19b) in the transverse wall (19a) allowing the passage of an elongate attachment member such as a screw (V).

11. Arrangement according to any one of the preceding claims, wherein each of the N notches (22) of the sleeve (19) comprises a substantially flat bottom surface (23), N preferably being equal to four.

12. Arrangement according to any one of the preceding claims, wherein the sleeve (19) is of metal and has a first annular sealing surface, preferably formed by a first bead (25), and a second annular sealing surface, preferably formed by a second bead (26), each of the first and second annular sealing surfaces being formed on said external face (F) on either side of the N notches (22).

13. Arrangement according to any one of the preceding claims, wherein the N notches (22) open axially near the second face (20b) in said assembled state, the rotor element (18) comprising a shoulder (18a) which comes to abut axially against the first flange (31) outside the inner space (9).

14. Device (10) for purifying a gas issuing from a crankcase of an internal combustion engine, comprising the filtering element arrangement (100) defined in any one of the preceding claims, the device further comprising:
- a rotational drive shaft (11) which defines an axis (Y) of rotation and has an anchoring end (11a) for fixing the rotor element (18) with the same alignment along the axis (Y) of rotation which substantially coincides with the central axis (A) of the filtering medium (20);
- a housing (60) which has an inlet to admit untreated gases (G), an outlet (S) to evacuate treated gases (GP), and a passage for the drive shaft aligned with the axis (Y) of rotation, the anchoring end (11a) extending into the inner space (9) being surrounded by a connecting portion (PR) of the rotor element (18); and
- two opposite abutment means (48, 18a) formed respectively on the drive shaft (11) and the rotor element (18), preferably outside the inner space (9), enabling the filtering element (15) to be locked axially relative to the drive shaft (11) when the rotor element (18) is fixed to the anchoring end (11a).

15. Method for assembling a filtering element arrangement (100) according to one of claims 1 to 13, comprising the steps consisting essentially of:
- fixing a first flange (31) to a second flange (32) in an inner space (9) defined by an internal face (20c) of a ring-shaped coalescer filtering medium (20), by engaging at least one retaining member (44) that is part of the second flange (32) with an anchoring part (35) that is part of the first flange (31) and enabling the first and second flanges to be rotationally integral, thus obtaining a filtering element (15);
- inserting into the inner space (9) a one-piece sleeve (19) intended to rotate the filtering element (15), by inserting the sleeve through a central opening (33) defined by the first flange (31);
- rendering the sleeve (19) and the filtering element (15) rotationally integral by engaging, in N notches (22) of an external surface (F) of the sleeve (19), N spaced-apart projections (38) formed in the anchoring part (35) which project radially inward from an internal face (F1) of the filtering element (15), N being an integer greater than or equal to two, the engagement being achieved when the sleeve (19) is inserted in a linear displacement, so that once inserted into the inner space (9), the sleeve (19) is arranged in such a way that the N notches (22) axially open in the direction of the second flange (32).
